# EUROPEAN PATENT APPLICATION

(11) **EP 3 989 129 A1**
(43) Date of publication of application: **27.04.2022**
(21) Application number: 20203454.2
(22) Date of filing: 22.10.2020
(51) Int. Cl.: G06N 5/04, G06N 20/00, G06N 5/02, G06N 5/00

(54) **A COMPUTER-IMPLEMENTED METHOD FOR DERIVING A DATA PROCESSING AND INFERENCE PIPELINE**

(71) Applicant: Omina Technologies BV, 2018 Antwerpen (BE)
(72) Inventor: Alexander, Rachel, 2018 Antwerpen (BE); Van den Broeck, Wouter, 1070 Anderlecht (BE)
(74) Representative: IP HILLS NV

(57) **Abstract**

The present disclosure relates to a computer-implemented method for deriving a data processing and inference pipeline based on a predefined specification, the computer-implemented method comprising: obtaining metadata characterizing data to be processed and performance metrics for evaluating the performance of the data processing and inference pipeline; fuzzifying the obtained metadata to derive fuzzy metadata; constructing one or more candidate data processing and inference pipelines fulfilling the pre-defined problem specification, wherein a candidate data processing and inference pipeline comprises a set of interconnected data processing and inference blocks; and selecting, from the one or more candidate data processing and inference pipelines, a data processing and inference pipeline characterized by an optimum overall performance score.

## Description

### Technical Field

Various example embodiments relate to a computer-implemented method for deriving a data processing and inference pipeline. Further embodiments relate to a computer program product implementing the method, a computer-readable medium comprising the computer program product and a data processing system for carrying out the method.

### Background

Artificial intelligence, Al, has gained tremendous traction in recent years demonstrating its performance advantage which surpasses human decision making in many instances. Al-based solutions involve the integration of various algorithms that perform tasks such as data collection and transformation, machine learning, data mining, and many more. Machine learning algorithms build a mathematical model based on sample data, known as training data, in order to make predictions or decisions without being provided with a manually constructed deductive model. This makes machine learning highly applicable in a variety of applications such as speech recognition, traffic prediction, online fraud detection, email spam and filtering, etc. Data mining algorithms, on the other hand, are used to process large data sets using a combination of different techniques such as statistics to extract various information such as patterns, anomalies, and so on. Typical data mining applications include market analysis, fraud detection, financial banking, and customer segmentation.

Al-based solutions are highly specific for the problem or the task in mind and require the involvement of experts in the field of Al, data science and the problem domain. This makes the development of AI solutions a tedious and costly process.

### Summary

Amongst others, it is an object of embodiments of the present disclosure to provide a computer-implemented method for automatically deriving an Al solution without the involvement and intervention of Al and data science experts. It is a further object of embodiments of the present disclosure to provide a computer-implemented method enabling the development of Al solutions highly tailored to the user's needs. It is a yet further object of embodiments of the present disclosure to enable user control over the development of the Al solution.

The scope of protection sought for various embodiments of the invention is set out by the independent claims. The embodiments and features described in this specification that do not fall within the scope of the independent claims, if any, are to be interpreted as examples useful for understanding various embodiments of the invention.

This object is achieved, according to a first example aspect of the present disclosure, by a computer-implemented method for deriving a data processing and inference pipeline based on a pre-defined problem specification, the computer-implemented method comprising:
- obtaining metadata characterizing data to be processed and performance metrics with associated scores for evaluating the performance of the data processing and inference pipeline;
- fuzzifying the obtained metadata to derive fuzzy metadata;
- constructing one or more candidate data processing and inference pipelines fulfilling the pre-defined problem specification, wherein a candidate data processing and inference pipeline comprises a set of interconnected data processing and inference blocks; and
- selecting, from the one or more candidate data processing and inference pipelines, a data processing and inference pipeline characterized by an optimum overall performance score;
wherein the constructing comprises:
- obtaining, from a repository, information characterizing respective data processing and inference blocks in terms of input and output data constraints and sets of rules for evaluating the performance of a respective data processing and interference block in terms of the obtained performance metrics by characterizing the respective identified data processing and inference blocks in terms of their respective input and output data constraints and the obtained performance metrics;
- identifying, based on the obtained information, data processing and inference blocks characterized with corresponding input and output data constraints;
- calculating, by means of fuzzy inference, one or more performance scores for the respective identified data processing and inference blocks by applying the sets of rules to the obtained metadata, the one or more performance scores indicating the performance of the respective identified data processing and inference blocks in terms of the obtained performance metrics and its input and output data constraints.

In other words, the construction of the data processing and inference pipeline as an Al solution is not based on actual or raw data and the involvement of Al and data science experts. Instead, a data processing and inference pipeline is constructed automatically solely based on the problem specification at hand, the performance metrics for evaluating the performance of the pipeline, i.e. information readily available to the user, and the metadata characterizing the data to be processed.

By utilizing metadata rather than actual data, less information is required to derive a solution pipeline with an optimum overall performance score. This further allows maintaining data confidentiality as actual data is not disclosed to third parties. Furthermore, utilizing metadata rather than actual data allows the method to be run remotely, for example, on a server machine installed on the cloud, rather than at the premises of the user.

Further, by abstracting the data processing and inference blocks in terms of input and output data constraints and associated sets of rules, efficient pipeline construction and performance evaluation is enabled. This further allows user control over the development of the Al solution and also enables explainability and interpretability of the derived Al solution.

All of the above allows guaranteeing that the derived pipeline fulfils the problem specification and satisfies the performance requirements without Al and data science experts' involvement. Even more, the derived pipeline offers optimum performance. As a result, a cost-efficient and an optimum solution is devised that is highly tailored to the user needs and requirements.

According to an example embodiment, the obtaining metadata comprises obtaining one or more qualitative and/or quantitative metrics characterizing the data to be processed from a user.

In other words, the user may provide the metadata characterizing the data to be processed in terms of one or more quantitative and/or qualitative metrics. Examples of quantitative metadata include any data metric which may be quantified such as count, percentage, range, mean, median and mode values, variance, standard deviation, distribution type, etc. Examples of qualitative metadata include cost, accuracy, precision, confidence, and so on. For example, the cost metric may specify the cost to obtain data using specific equipment which may be a high-grade professional or commercial-grade equipment or similar, while the accuracy specifies how close a measured value is to the true value and precision specifies how reproducible the measurement is. In another example, the cost metric may reflect the cost of the predictions, e.g. false positive, false negative, true positive and true negative predictions.

By employing quantitative as well as qualitative metrics, a more precise characterization of the data to be processed is obtained. This allows obtaining more complete information about the data to be processed and in turn deriving an Al solution offering optimum performance.

According to an example embodiment, the obtaining metadata comprises obtaining data to be processed and deriving therefrom one or more qualitative and/or quantitative metrics characterizing the data to be processed.

In other words, the metadata may be derived from the data to be processed. In such a case, the obtained data is analysed or processed to derive the metadata. The thus derived metadata may be used alone or in addition to the metadata provided by the user to obtain a more complete characterization of the data to be processed. Utilizing actual or raw data and metadata allows the deriving of an even more optimal Al solution.

According to an example embodiment, the deriving comprises analysing the obtained data by means of data analysers.

Data analysers may be used to analyse or parse the obtained data to derive various metadata. For example, statistical algorithms or any other algorithm suitable may be used for deriving quantitative and qualitative metadata.

According to an example embodiment, the fuzzifying comprises applying sets of membership functions to the respective metadata.

In fuzzy logic terminology, membership functions define how a data value is mapped to a fuzzy set with some degree of membership or uncertainty. The sets of membership functions thus allow quantifying the respective metadata with a certain degree of uncertainty or probability to various data attributes or characteristics, i.e. a fuzzy set. Typically, the degree of membership is defined within an interval of zero to one. The membership functions may be a singleton, Gaussian, trapezoidal or triangular function.

Different types and numbers of membership functions may be used to quantify a respective data metric, i.e. a set of membership functions may comprise one or more membership functions of the same or different types. For example, the qualitative metric "noisy" of a data set may be quantified to the attributes "not noisy", "slightly noisy" and "very noisy" using three Gaussian membership functions, while the qualitative data metric "cost" may be quantified to the attributes "low cost" and "high cost" using two trapezoidal membership functions.

The sets of membership functions are pre-defined for example by technical experts. This allows a more complete evaluation of the performance of a block and therefore a more refined selection process.

According to an example embodiment, the sets of rules for evaluating the performance of a respective data processing and interference block are derived based on its input and output constraints and the obtained performance metrics.

In other words, the sets of rules for a respective block are derived by considering the input and output constraints of a respective block and by taking into account the obtained performance metrics. The input and output constraints of a block may indicate the data type, size, and other characteristics required by a block to provide good results.

A different number of sets of rules with a respective set comprising one or more rules may be derived for different blocks. That is, the performance of a specific block in terms of one performance metric may be evaluated by applying one rule, while its performance for another performance metric may be evaluated by applying two or more other rules. For example, linear regression requires a medium to large data set with good linearity to achieve good accuracy. Therefore, a rule estimating the performance of for example a block implementing linear regression in terms of accuracy may be derived by taking into account both the size of the input data and its linearity.

By deriving the sets of rules in this manner, the performance of a respective block may be estimated in terms of the obtained performance metrics, i.e. by quantifying how well a block performs with respect to obtained performance metrics. In this way candidate blocks may be identified which satisfy the performance metrics specified by the user and have an optimum or the best performance may be selected.

According to an example embodiment, the calculating further comprises aggregating the derived respective performance scores of the identified data processing and inference blocks, and, combining the aggregated performance scores, thereby deriving an overall performance score for a respective candidate data processing and inference pipeline, wherein the combining comprises weighting the aggregated performance scores in accordance with weight factors associated with respective performance metrics.

In other words, the performance scores for respective performance metrics, e.g. "accuracy" and "cost", are aggregated to derive an overall score for a respective performance metric across all blocks in a candidate pipeline. The overall scores are then combined together by first weighting the overall scores with the weight factors associated with the respective performance metrics, and, then summing the weighted scores together. An overall score quantifying the performance of the complete pipeline is thus derived. Alternatively, the overall score may be derived by first combining the scores of a respective block, i.e. weighting the respective scores and then summing them together, to derive an overall score for a block, and, then aggregating the overall scores of the respective blocks to derive the overall scores for all blocks. Alternatively, the performance scores of the blocks may be aggregated in a non-linear manner, for example, by means of fuzzy rules.

This way an overall score quantifying the performance of the pipeline may be derived. By, for example, weighting the scores, user preference or prioritization of certain performance metrics is taken into account. Deriving an overall score in this manner allows for an objective comparison of the candidate pipelines in terms of the performance metrics and therefore an objective selection process.

According to an example embodiment, the constructing is performed in an incremental manner.

In other words, in a first step, a first set of blocks performing a respective function are identified. An overall performance score for the respective blocks is calculated and one or more candidate blocks with optimum overall scores are selected. From the candidate blocks the block with the optimum overall score is then selected and added to the pipeline. For this purpose, the performance of the pipeline augmented with the respective candidate blocks, i.e. the performance of the candidate pipelines, is estimated to select the optimum performing one. In the next step, a second set of blocks is selected performing another function and having input data constraints matching the output data constraints of the one or more blocks of the pipeline derived in the preceding step. Again, as in the preceding step, overall performance scores for the respective blocks of the set are calculated and the blocks with the optimum performance score is selected to construct the candidate pipelines. The performance of the candidate pipelines is evaluation and the optimally performing one is selected. In this way, a pipeline of interconnected blocks is thus incrementally or gradually constructed using optimally performing sets of blocks. The incremental construction thus allows re-evaluating the performance of the pipeline in the process of its construction and therefore a better pipeline performance estimation. For example, the pipeline performance may be re-evaluated when a new block or set of blocks is added to the pipeline.

According to an example embodiment, the method further comprising evaluating the performance of the selected data processing and inference pipeline in terms of the obtained performance metrics and based on the data to be processed, wherein the evaluating comprising at least partly deploying the selected data processing and inference pipeline and determining an actual overall performance score for the at least partly deployed data processing and inference pipeline.

In other words, the performance of at least part of the candidate pipeline may be evaluated using the actual or raw data, i.e. the data to be processed. Deployment of the pipeline may be necessary when one or more blocks require actual raw data or additional metadata to evaluate their performance. This may be the case, when training of a learning algorithm is required such as machine learning, or when the performance evaluation of a block requires additional metadata such as the sample size or the balancedness of a training data set. In such cases, part of the pipeline comprising one or more blocks preceding the block or blocks in question are deployed. Alternatively, the complete pipeline may be deployed as soon as actual raw data or additional metadata is required for the performance evaluation of a block, i.e. the deployment is performed dynamically. Alternatively, the deployment may be performed in a structural manner. For example, the method may deploy a group of interconnected blocks which may be identified as a composite block as soon as such a group of interconnected blocks is constructed. An example of such a group may be a pre-analytics composite block comprising interdependent data analyser blocks, or a model training composite block comprising a machine learning model training block together with the required pre-processing and post-processing blocks. Such structural deployment process entails significantly fewer deployment options in comparison to the dynamic deployment approach and, therefore, a more efficient deployment decision process.

The pipeline, whether partial or complete, may be deployed at the premises of the customer, for example at a customer server, or, on the cloud. Deploying the pipeline on a customer server may be necessary when the data to be processed contains sensitive information.

Further, deployment of the pipeline allows deriving new metadata which may also be used instead of or in addition to the obtained metadata for the evaluation of the performance of the subsequent blocks. Additionally, the deployment may result in modifying one or more metadata to more accurate values thus characterizing more accurately the actual or raw data. This further improves the performance evaluation of the candidate pipeline.

According to an example embodiment, the evaluating further comprises determining values of respective parameters associated with the respective data processing and inference blocks of the at least partly deployed pipeline.

In other words, deployment of the one or more blocks of the pipeline allows determining the values of various parameters needed for the performance estimation of one or more subsequent blocks in the pipeline. For example, the optimum values of respective hyperparameters required for a linear regression model training block may be determined when deploying a part of the pipeline implementing a linear regression hyperparameter optimization algorithm. This allows such parameters to be treated as any other metadata. Similarly, model parameters acquired by deploying a learning model optimization block can be treated as any other metadata.

According to a second example aspect, a computer program product comprising computer-executable instructions for causing a computer to perform the method according to the first example aspect when the program is run on the computer.

According to a third example aspect, a computer readable storage medium comprising computer program product according to the second example aspect.

According to a fourth example aspect, a data processing system programmed for carrying out the method according to the first example aspect.

The various example embodiments of the first example aspect may be applied as example embodiments to the second, third, and fourth example aspects.

### Brief Description of the Drawings

Some example embodiments will now be described with reference to the accompanying drawings.
FIG.1A shows an example embodiment of the client device interfacing with an application server according to an example embodiment;
FIG.1B shows steps for deriving a data processing and inference pipeline performed by the application server according to an example embodiment.
FIG.2A shows examples of candidate data processing and inference pipelines according to an example embodiment;
FIG.2B shows other examples of candidate data processing and inference pipelines according to an example embodiment;
FIG.2C shows the performance score for a selected data processing and inference pipeline according to an example embodiment;
FIG.3 shows an example block scheme of a candidate data processing and inference pipeline according to an example embodiment;
FIG.4 shows steps for calculating the performance scores for a data processing and inference block according to an example embodiment;
FIG.5 shows steps for evaluating the performance of the candidate data processing and inference pipeline of FIG.3 according to an example embodiment;
FIG.6 shows steps for analysing the obtained samples according to an example embodiment;
FIG.7 shows steps for assessing results of a data processing and inference block according to an example embodiment;
FIG.8 shows an example embodiment of a suitable computing system for performing one or several steps in embodiments of the present disclosure.

### Detailed Description of Embodiment(s)

The present disclosure relates to deriving an Al solution and more particularly to a computer-implemented method and a data processing system for deriving an Al solution based on a problem specification, metadata characterizing the data to be processed, and performance metrics specified by a user. An Al solution involves the integration of various data processing and inference algorithms suitable for processing the data to be processed to resolve a particular problem specification such as speech recognition, prediction of a system's or equipment's failure, manufacturing processes optimization, credit card fraud detection, traffic prediction, and many more. Thus, an Al solution will comprise a number of interconnected data processing and inference blocks performing various algorithms or operations such as data retrieval or ingestion, inference, processing, transformation, optimization, service integration, visualization, etc. Examples of such blocks include data manipulators such as data filters, data converters, and data cleaners; data analysers such as statistical and descriptive data analysers; data classifiers such as content-based and context-based data classifiers including linear classifiers, feature vector classifiers, imbalanced classifiers, and binary and multiclass classifiers; data regressors such as parametric-based, nonparametric-based and semiparametric-based regressors; data predictors such as data mining and machine learning algorithms; multi-variable optimizers, data anonymizers, model analysers (e.g. benchmarking or fairness analysers), explainers, data retrievers and/or data ingestors, result exposers or dispatchers, access controllers, and so on.

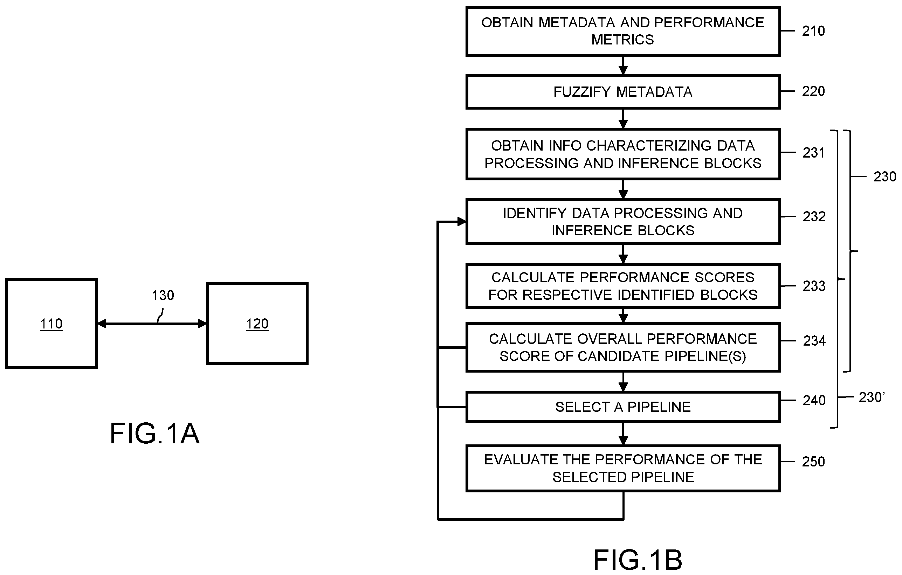

FIG.1A shows an exemplary embodiment of such a data processing system 120 such as a server machine installed on the cloud interfacing with a client service 110 which may be installed on a device such as a computer or any other device capable of interfacing with the system 120 via an interface 130. The client service 110 is a user-controlled compute environment installed for example at the premises of the user or customer that allows the user to provide the system 120 with the problem specification or a use case, the metadata characterizing the data to be processed, and the desired performance metrics. Based on the obtained information, the system 120 will automatically derive an Al solution fulfilling the problem specification and having an optimum performance.

The computation capabilities of the client service 110 allow deriving metadata from actual data to be processed in the cases when metadata is not available or when the metadata provided by the user is incomplete or insufficient for the system 120 to derive an Al pipeline for the specified use case. In such cases, client service 110 may be fed with the actual data to extract various metadata as detailed below. Thus, only metadata is provided to the system 120 which allows for preservation of data confidentiality.

Furthermore, computation capabilities of the client service 110 allow deploying of a partial or complete pipeline at the client service 110. Deployment entails installing a software solution specific for the client service 110 derived by for example compiling the algorithms or operations realized by the interconnected blocks of the partial or complete pipeline. Deploying may be necessary in cases where one or more blocks require actual raw data or additional metadata for their performance evaluation. For example, to evaluate the performance of a block implementing a linear regression-based classification, the pre-processing block analysing the linearity of the given training data needs to be deployed. In such a case, part of the pipeline comprising the block deriving the required metadata and optionally the block in question may be deployed to the client service 110 so that the linearity of the training data is assessed. Another example in which deployment may be necessary is when the fairness of a trained model of a block implementing a learning algorithm needs to be evaluated using given validation data.

FIG.1B shows the steps for deriving a data processing and inference pipeline according to an exemplary embodiment of the present disclosure. In a first step 210, problem specification or a use case, performance metrics, and metadata characterizing the data to be processed are obtained. As mentioned above, the performance specification may be any use case from a credit card fraud detection to email spam and filtering, from speech recognition to optimized manufacturing processes and so on. The metadata may include one or more quantitative and/or qualitative data metrics characterizing the data to be processed, i.e. the actual data. For example, the quantitative metadata may include any data metric which may be quantified such as count, percentage, range, mean, median and mode values, variance, standard deviation, distribution type, and so on, while the qualitative metadata may include cost, accuracy, precision, confidence and so on. For example, the cost metric may specify the cost of the false positive, false negative, true positive and the true negative predictions, while accuracy may specify how close the measured value is to the true value and precision may specify how reproducible is the measurement.

The performance metrics may include at least one of domain-specific performance metric such as regulatory requirements and compliance related to, for example, government regulatory regimes, including anti-discrimination or privacy regulations, and industry standards, customer-specific performance metric such as accuracy, fitness, explainability, fairness, cost, precision and recall, and other performance metrics such as various industry-specific key performance indicators, KPIs, various ethical considerations such as avoiding discrimination based on disability, gender, race, etc, and so on.

In the use case of credit card fraud detection, for example, the metadata may include the amount as well as the date and time of the credit card transactions, frequency, geographical locations of credit card transactions, etc. The performance metrics may be precision, recall, etc. In this use case, precision will indicate the ratio of correctly predicted fraudulent credit card transactions to the true fraudulent credit card transaction while recall will indicate the ratio of the correctly predicted fraudulent credit card transaction to the true fraudulent credit card transaction.

Further, the user may specify the importance of the respective performance metrics. This is done by associating weight factors to respective performance metrics. A default option may be to assign an initial weight assigning equal value to the corresponding metrics which then may be modified by the user according to his preferences. For example, if the user indicates accuracy and recall as the performance metrics, each of the metrics may be assigned a default weight factor of 0.5. The user may then modify them to increase or decrease the importance of one or more metrics with respect to the others. Alternatively, instead of assigning weight factors, the respective performance metrics may be associated with fuzzy variables having, for example, a value ranging from important to not important.

In the next step 220, obtained metadata is fuzzified. Fuzzification is the process of assigning an input value, for example, a numerical value, to fuzzy sets with some degree of membership. This degree of membership may be anywhere within the interval [0,1]. If it is 0 then the value does not belong to the given fuzzy set, and if it is 1 then the value completely belongs within the fuzzy set. Any value between 0 and 1 represents the degree of uncertainty that the value belongs in the set. These fuzzy sets are typically described by words, e.g. "low", "poor" or "high", and so by assigning the input value to fuzzy sets, a user can assign membership in a linguistically natural manner. In other words, the membership is a function that defines how each point in the input space is mapped to the membership values between 0 and 1 in a fuzzy set, i.e. fuzzy metadata attributes or characteristics.

For example, the meanings of the expressions "cold", "warm", and "hot" may be represented by functions mapping a temperature scale. A point on the temperature scale will thus have three "truth values"- one for each of the three functions, i.e. "cold", "warm" and "hot". A temperature value of 18°C may be interpreted as "not hot"; i.e. this temperature value will have a 0.0 membership in the fuzzy set "hot". At the same time, this temperature value may be interpreted as slightly warm i.e. with a 0.2 membership in the fuzzy set "warm" and "fairly cold" with a 0.8 membership in the fuzzy set "cold" Therefore, this temperature of 18°C may have the values 0, 0.2 and 0.8 memberships in the fuzzy set "hot", "warm" and "cold", respectively. The degree of membership assigned for each fuzzy set is the result of fuzzification. Similarly, various metadata may be fuzzified to be represented by a respective fuzzy set in a fuzzy variable.

The fuzzy sets are typically defined by triangular or trapezoid-shaped membership functions, where the slope represents an increasing or decreasing value and the peak a maximum value. The fuzzy sets may also be defined using a Gaussian or a sigmoid membership function. The fuzzy sets and the associated membership functions may be predefined based on expert knowledge.

Occasionally, some of the obtained metadata may be provided by the user already in a fuzzy form. In such cases, that metadata need not be fuzzified.

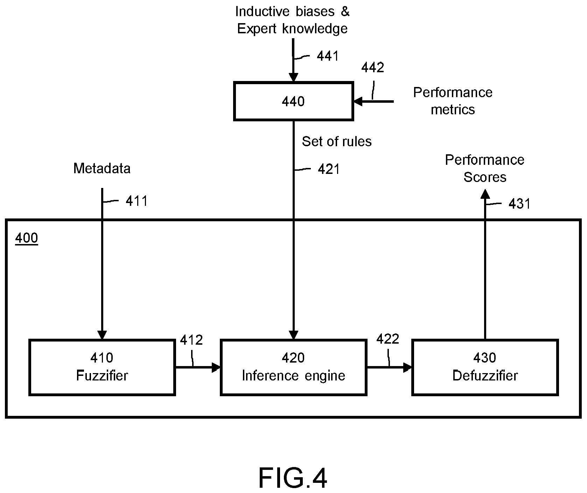

Next, a data processing and inference pipeline is constructed as shown in step 230. The construction of the pipeline is done incrementally. In other words, the pipeline is constructed progressively. First candidate data processing and inference blocks are identified performing a required functionality, then their respective performance is evaluated, and finally, the block performing optimally in terms of the obtained performance metrics is selected and added to the pipeline. At each step of the pipeline construction, the steps of identifying, selecting, and adding are performed until a pipeline with optimum performance is constructed fulfilling the problem specification. The process of the construction will be now detailed below with reference to FIG.4 showing the process of calculating the performance scores of a candidate block.

First, information characterizing candidate blocks for the construction of the pipeline is obtained in 231 from a repository which may be residing in the system 120. The obtained information characterizes a respective block in terms of its input and output data constraints. Input and output data constraints include information about data requirements, required input parameters, model specification, and so on. For example, these may be the data type of the input and output data, e.g. Boolean or integer, the range of the input and output data, and so on. For example, a support vector machine, SVM, performs better if the input data is normally distributed data, i.e. data having values ranging from 0 to 1. The candidate blocks are selected based on the obtained problem specification and the available metadata.

Returning to the example use case of a credit card fraud detection, the derived Al solution must be able to for example predict whether a certain transaction is fraudulent and provide a risk rating of the predicted fraud transactions based on, for example, the nature of the transactions, etc. This requires the use of for example a machine learning algorithm such as a linear regression, support vector machine, SVM, decision tree, DT, algorithms or similar. Thus, information characterizing the blocks implementing the required functionality is retrieved.

Once information about the blocks implementing machine learning algorithms is retrieved, the method identifies 232 which of the blocks have input data constraints matching the obtained metadata. For example, a linear regression algorithm requires a medium to large size linearly distributed and normalized dataset. Thus, if the metadata specifies that the data to be processed is a linearly distributed dataset with a medium size, then the block implementing linear regression algorithm may be selected as a candidate block for the pipeline construction. However, if the metadata specifies that the data to be processed is not normalized, then a data normalizer block that normalizes data may be added in front of the linear regression block. The input data constraints of the linear regression block are thus matched with the output data constraints of the data normalizer block. In other words, the blocks which have input and data constraints most completely matching the characteristics of the metadata, i.e. the data to be processed, will be selected as candidate blocks. Different criteria may be employed to determine the degree of matching, for example, by comparing the metadata with the data constraints of the blocks.

The normalizer and linear regression blocks form a group of interconnected blocks which may be regarded as a composite block. Once a new composite block is formed or constructed, the system 120 may store the input and output data constraints and the set of rules associated with the composite block in the repository for future use. This way the repository is enriched with new information which decreases the construction time of subsequent pipelines.

Depending on how well a candidate block performs, the candidate block may or may not be used in the construction of the pipeline. For this purpose, performance scores are calculated 233 which characterize its performance in terms of the obtained performance metrics. Herein, this is achieved by applying a set of rules associated with the respective candidate blocks to the obtained metadata.

The sets of rules associated with a respective block may be obtained from the repository together with the obtained input and output data constraints, i.e. in step 231. Alternatively, the set of rules may be obtained once the candidate blocks are identified, i.e. in step 233. Thus, by obtaining the sets of rules only for the identified blocks, the amount of data transferred from the repository to the system 120 is limited.

The sets of rules allow estimating the performance of a respective block in terms of various performance metrics. They may, for example, be derived based on the inductive biases of a respective algorithm and the various performance metrics. The inductive biases are usually not explicitly defined but are typically inherent to the respective algorithm as they specify the assumptions the algorithm uses to derive or predict an output or a result. In other words, the inductive biases provide a parameterized specification of how a respective building block works. For example, a block performing a linear regression requires normalized medium to large data set with good linearity to achieve good accuracy. The quantification of whether a data set as "medium" or "large" is an inherent property of the algorithm and quantification of what is considered to be a medium or large dataset is derived for example from data science expert knowledge. Similarly, the support vector machine algorithm, SVM, performs best when supplied with a data set characterized by a large number of features. Again, the quantification of what is considered a "large" number of features is inherent to the algorithm, and quantification of what is to be considered as a large number of features may be derived from data science expert knowledge. Thus, by exploiting the inductive biases, the expert knowledge, and the performance metrics, a set of rules for estimating a block's performance may be derived. The sets of rules associated with the respective blocks are stored in the repository.

The set of rules are defined in the form of conditional statements such as IF-THEN conditions which govern the performance evaluation process. For example, the performance metric "accuracy" of a building block implementing linear regression may be evaluated by several rules rating the performance of the building block from "excellent", to "impossible". A rule may be defined as if the "linearity" of a sample set is "large" and if the "sample regression" of the sample set is "suitable" then the performance metric "accuracy" is "excellent", and if "sample regression" of the set is "impossible" then the performance metric "accuracy" is also "impossible".

Another example of rules may be for estimating the prediction speed of an algorithm. For example, K-Nearest Neighbours, KNN, algorithm which is a lazy learner algorithm, i.e. its training speed is high but its prediction speed is low, while DT and SVM algorithms are eager learner algorithms, i.e. their training speed is low but their prediction speed is high. Thus, by exploiting these rules for estimating, the prediction speed of learning algorithms are derived.

In other words, the performance evaluation process herein employs the idea of a fuzzy concept. FIG.4 shows a schematic illustration of a block represented as a fuzzy logic block 400. The fuzzy logic block 400 comprises a fuzzifier 410 and inference engine 420 and a de-fuzzifier 430. The fuzzifier 410 is configured to receive metadata 411 characterizing the actual data to be processed. As detailed above the fuzzifier 410 converts the input data i.e. metadata, into fuzzy set membership values 412. This corresponds to the fuzzification step 220 described above. The fuzzy set membership values 412 which may also be referred to as the fuzzy input is fed to the inference engine 420 which estimates how well the fuzzy input 412 matches the input data constraints and the inductive biases of a respective block. This allows for estimating how well the respective block performs its specific task given the actual data. To do so, the inference block applies the set of rules 421 associated with the respective block which are relevant for the assessment of the performance metrics specified by the user. As described above, the set of rules 421 is derived based on the inductive biases of the block, the data science expert knowledge 441, and the performance metrics 442. The set 421 contains rules which govern the performance evaluation process of the inference engine 420. In fuzzy logic terminology, the set of rules are typically referred to as the rule base. The output 422 of the inference engine 420 is a fuzzy output describing the block's performance as fuzzy set membership values which may be annotated using linguistic terms such as "excellent", "good", "suitable", "mediocre" and so on. For example, the score of the performance metric "accuracy" may be calculated to be "excellent", the score of the performance metric "recall" may be calculated to be "very good" and so on. The fuzzy output 422 is then fed to the defuzzifier 430 where it is transformed back into numeric values. For example, the score of the performance metric "accuracy" may have a value of 0.95, and the score of the performance metric "recall" may have a value of 0.82.

In other words, the blocks are abstracted in terms of input and output data constraints and associated set of rules which allow, on one hand, identifying candidate blocks with corresponding input and output data constraints so that a pipeline may be constructed by interconnecting various blocks, and, on the other hand, estimating the performance of the respective blocks and therefore of the pipeline thus enabling automatic pipeline construction with optimum performance in terms of the performance metrics specified by the user.

Returning to FIG.1B, once the performance scores of the candidate blocks are calculated 233, an overall performance score for the candidate blocks is derived and the block performing optimally is selected and then added to the pipeline. In other words, step 233 includes a selection step where the optimum performing block is added to the pipeline. The overall performance score of the selected block is derived by first weighting the respective scores with the weight or importance factor provided by the user and then summing them together. Alternatively, the overall performance score may be derived by employing fuzzy rules defining the aggregation of the performance scores.

Next, in step 234, the performance scores including the overall performance score of the pipeline are updated with the scores of the newly added block. For this purpose, first, the respective performance scores of all blocks in the pipeline are aggregated together to derive an overall score for a respective performance metric and then combined by weighting the scores with the weighting factors and then summing them together. In practice, when adding a new block to the pipeline, its performance scores including the overall score are simply added to the current scores of the pipeline. This completes one full step 230 of the pipeline construction process. The method then proceeds back to the step of identification to identify candidate blocks for the next task, and selects and adds to the pipeline the optimally performing block until the pipeline is constructed. Again, fuzzy rules may be employed to derive the overall performance score of the pipeline.

At a certain stage of the pipeline construction, deployment of part of the constructed pipeline or the complete pipeline at the client service 110 may be necessary. In such a case, the method skips to step 250 to evaluate the performance of the partially constructed pipeline. Deployment of the pipeline may be necessary when one or more candidate blocks require actual raw data or additional metadata for the estimation of their performance. This may be the case, when training of a learning algorithm is required such as machine learning, or when the performance evaluation of a block requires additional metadata such as the sample size or the balancedness of a training data set. In such cases, part of the pipeline comprising one or more blocks preceding the block or blocks in question are deployed. Alternatively, the complete pipeline may be deployed as soon as actual raw data or additional metadata is required for the performance evaluation of a candidate block. Alternatively, the deployment may be performed in a structural manner, i.e. as soon as a group of interconnected blocks, e.g. a composite block, is constructed. Examples of composite blocks may be a pre-analytics composite block comprising interdependent data analyser blocks or a model training composite block comprising a machine learning model training block together with the required pre-processing and post-processing blocks. Additionally, the deployment may result in modifying one or more metadata provided by the user to more accurate metadata thus characterizing more accurately the data to be processed.

Furthermore, deployment allows the user to add additional metadata. This new information will then be considered during the further construction of the pipeline.

Further, deployment allows, for example, deriving the optimum values of the hyperparameters associated with the leaning model of a learning algorithm. An example of a hyperparameter is the linear rate of a linear regression model. Deployment thus allows determining the optimum values of the hyperparameters and therefore the actual performance of the block. This may be done by employing a cross-validation approach in which the blocks implementing linear-regression hyperparameter optimization and linear regression model training are deployed. Once deployed, an initial value for the hyperparameters of the learning model is first selected. Then, the learning model is trained using actual training data. Finally, the results produced by the learning model are compared with ground-truth data. These three steps are repeatedly performed until an optimum performance of the learning algorithm is reached.

This allows the hyperparameters to be treated like any other metadata that can be acquired by deploying blocks. Similarly, this holds true for the model parameters acquired by deploying a model trainer block.

According to a second example embodiment, the data processing and inference pipeline construction may be performed as shown in step 230'. In this embodiment, the construction of the pipeline is done similarly to the construction process for step 230, however, instead of directly adding the optimally performing block to the pipeline, a number of blocks with the highest overall performance score or the most optimally performing are selected in step 233. Then, in step 234, candidate pipelines are formed by adding the respective selected blocks so that the performance of the candidate pipelines is estimated. As a result, performance scores including an overall performance score for the candidate pipelines and their respective blocks are obtained. In other words, candidate pipelines augmented with the respective candidate blocks are constructed and their performance is estimated. Next, in step 240, the optimally performing candidate pipeline is selected thus completing one full step 230' of the pipeline construction process. This selection process is preferred as a candidate block may affect the performance of the other blocks in the pipeline. Thus, by first evaluating 234 the performance of the respective candidate pipelines and then selecting 240 the optimally performing pipeline it is possible to account for these effects. Once a full step of the construction process is completed, the method proceeds back to the step of identification until the pipeline is constructed. Again, similarly to the embodiment above, during the construction process, one or more blocks of the pipeline may be deployed if necessary.

According to a third example embodiment, the selection in step 233 in the construction step 230 of the first example embodiment, or, the selection in step 234 in the construction step 230' of the second example embodiment, may be performed at the very end, after candidate pipelines are constructed. In this case, candidate pipelines fulfilling the problem specification and having satisfactory performance are constructed by performing steps 210 to 230 or 210 to 230' as detailed above with the exception that the selection of the optimum performing pipeline fulfilling the problem specification is performed in step 240. This implementation, however, requires much higher memory and compute resources as multiple pipelines are constructed at the same time. Further, this implementation is less flexible as it does not allow the user to add additional metadata during the pipeline construction process.

Combination of the different embodiments for constructing the pipeline are also possible. For example, rather than evaluating the performance of the candidate pipelines at every step of the construction process as shown by step 230' above, the pipeline evaluation may be performed once two or more construction steps were completed.

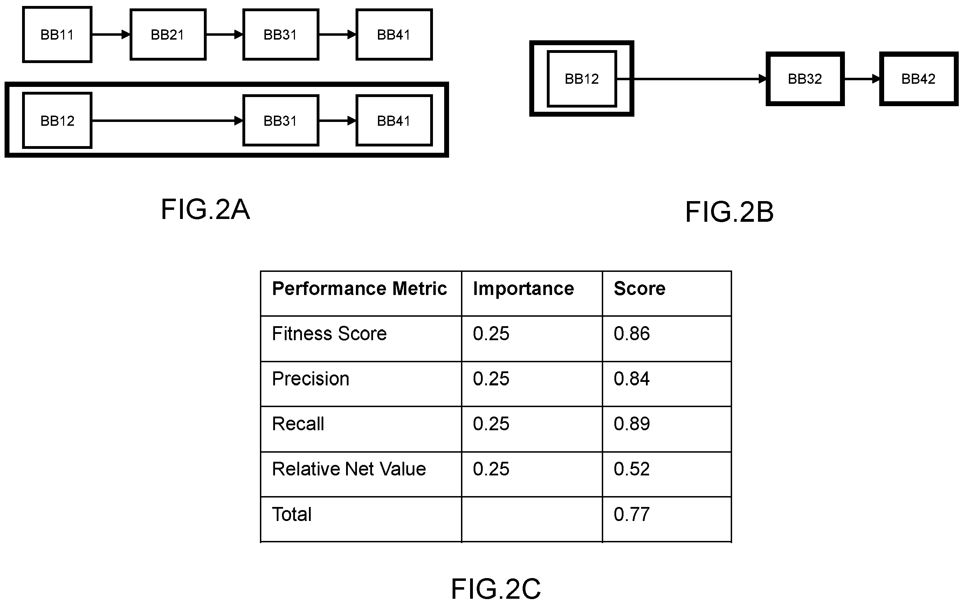

FIG.2A shows two examples of constructed pipelines. The pipelines may be constructed incrementally as detailed above. Depending on the user preferences, i.e. the specified performance metrics and their respective importance factor, the first pipeline may be the optimum solution for one set of user preferences and the second pipeline may be an optimum solution for another set of user preferences. As shown in the figure, the first pipeline comprises four blocks, i.e. blocks BB11 to BB41. For example, the block BB11 implements data analysis, block BB21 implements data normalization, block BB31 optimizes hyperparameter for a Decision Tree classifier, and block B41 trains the decision tree model. The output of block BB41 is thus a trained decision tree model. The second pipeline implements the same functionality however using three blocks, i.e. BB12, BB31, and BB41, instead of four. In this case, block BB12 may be a composite block that performs the same functionality as blocks BB11 and BB21. This avoids the need for a normalization block as the block BB21. From the two candidate pipelines, the one having an optimum overall performance score is selected, e.g. the second pipeline may be selected.

FIG.2B shows a third pipeline with the same functionality as the pipelines shown in FIG.2A. Differing from FIG.2A herein, in FIG.2B block BB12 is deployed prior to continuing the pipeline construction process, i.e. right after the data analysis and normalization composite block BB12 is added to the pipeline. During the deployment, block BB12 may extract additional metadata characterizing the training data. The extracted metadata thus leads to the selection of SVM classifier rather than a DT classifier (as in FIG.2A) as the SVM classifier is estimated to have better performance score. As a result, blocks BB32 which optimizes the hyperparameters for the SVM classifier and block BB42 which trains the SVM model. The metadata extracted from the training data set thus allows obtaining a better estimation of the performance of the subsequent blocks and therefore constructing a more optimally performing pipeline. The extracted metadata further allows block BB32 to derive optimum values for the hyperparameters and therefore a better performing SVN model.

FIG.2C shows the overall performance scores with their associated weight factors or importance as specified by the user for the pipeline of FIG.2B. As can be seen, the derived pipeline scores very high and has a total score of 0.77 .

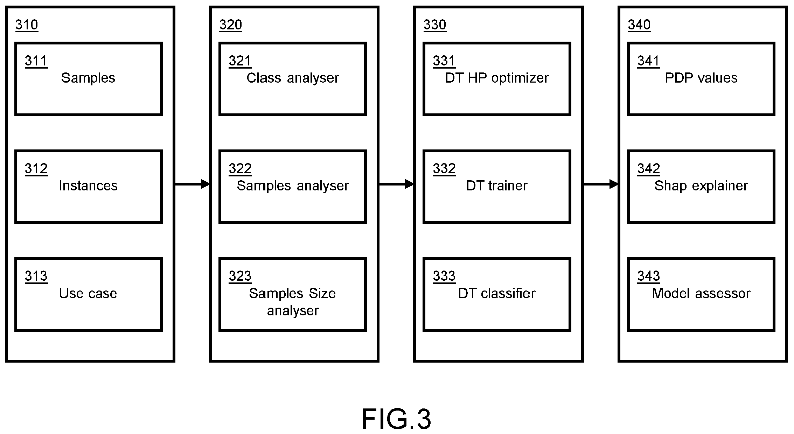

FIG.3 shows a block scheme of a candidate pipeline comprising a set of blocks for the detection of credit card fraud detection. In addition to the candidate pipeline the information obtained by the user, i.e. data samples 311, data instances 312, and use case 313 are also illustrated. The candidate pipeline is illustrated as a pipeline of three data processing and inference stages 320, 330, and 340. The first stage 320 is the analysis stage which comprises three blocks, namely a class analyser, samples analyser, and sample size analyser. The class analyser 321 classifies the sample set, the samples analyser 322 analyses the sample set to derive various features such as the names and proportion of continuous, binary and discrete features, the number and proportion of numerical and non-numerical features, and the sample size analyser 323 analyses the size of the sample set. The second stage 330 is the prediction stage which comprises a decision tree, DT, optimizer 331 which derives the decision tree model, a DT trainer 332 which trains the decision tree model using the loaded samples, and a DT classifier 333 which classifies the loaded samples using the trained model to output a prediction. The third and last stage 340 is the assessment stage which comprises a partial dependence plot, PDP, values 341, a Shapley Additive explainer, SHAP, 342, and a model assessor 343 blocks. The PDP block 341 shows the marginal effect of the various features on the outcome predicted by the DT classifier. the SHAP block 342 shows Shapley values for each feature used in the trained model, i.e. DT classifier, and the model assessor 343 provides the values of the respective performance metrics of the trained model, i.e. DT classifier, including the confusion matrix, fitness score, precision and recall metrics and so on.

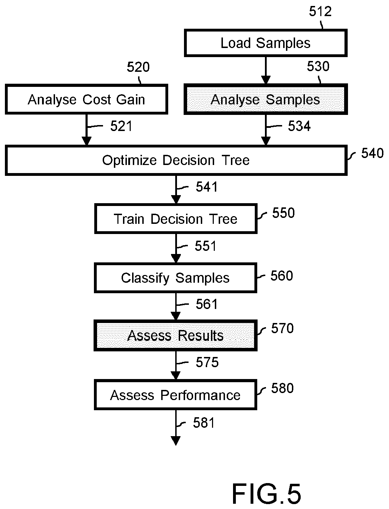

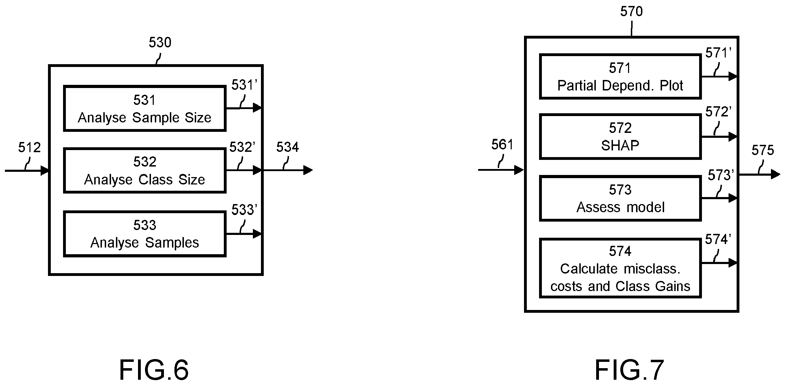

FIG.5 shows the steps of evaluating the performance of the pipeline of FIG.3. Once the pipeline is deployed to the client service 110, actual data samples 512 are loaded. The data samples comprise data including ground truth data and thus may be used for training and validating the decision tree classifier. The loaded samples reserved for training are then analysed by block 530 which derives various metadata 534 as shown in FIG.6 to derive information such as the size of the data samples 531', class of the data samples 532', and various features 533' characterizing the data samples. Also, the cost gain is analysed by block 520 to derive a cost gain matrix 521 which is used later to calculate the absolute and relative total cost due to miss-classification, total gain of correct classification as well as total net value business cost. The obtained information 521 and 534 is used to optimize 540 the decision tree model for most accurate prediction and in this case for maximum financial impact, while the information 534 to derive optimum values for its hyperparameters 541. The decision tree model is updated with the derived hyperparameter 541 and then trained 550. As a result, trained model 551 is derived which is then provided together with the loaded samples reserved for validation to the DT classifier block for classification 560. The obtained results 561 are then assessed in 570. As shown in FIG.7, block 570 may construct a partial dependence plot 571', SHAP values 572', and assesses the overall performance of the decision tree model 573'. Additionally, block 570 may also assess the misclassification and the gain costs 574'. The information derived from the assessment 575 is then fed to block 580 which assesses the overall performance of the pipeline.

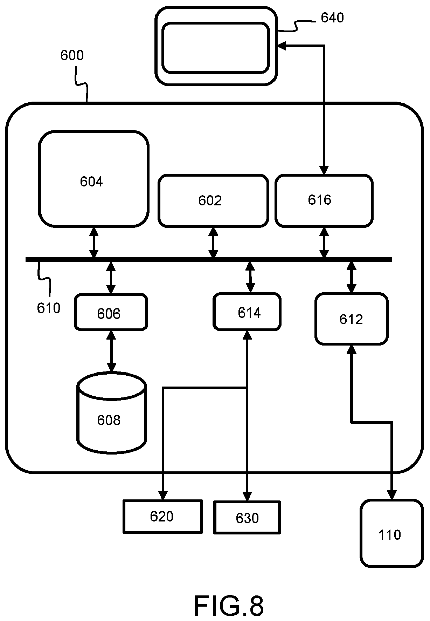

The steps as described above with reference to FIG.1B may be performed by a suitable computing system that has access to the repository and the client service 110. To this end, the steps may be performed from within system 120. FIG.8 shows a suitable computing system 600 enabling implementation of embodiments of the method for deriving an Al solution. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems, for example with other computing devices such as the client service 110. The communication interface 612 of computing system 600 may be connected to such another computing system which may be installed on the cloud, by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, -ROM disk, solid state drives, flash memory cards, ... could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for deriving a data processing and inference pipeline based on a pre-defined problem specification, the computer-implemented method comprising:
- obtaining (210) metadata characterizing data to be processed and performance metrics for evaluating the performance of the data processing and inference pipeline;
- fuzzifying (220) the obtained metadata to derive fuzzy metadata;
- constructing (230) one or more candidate data processing and inference pipelines fulfilling the pre-defined problem specification, wherein a candidate data processing and inference pipeline comprises a set of interconnected data processing and inference blocks; and
- selecting (240), from the one or more candidate data processing and inference pipelines, a data processing and inference pipeline **characterized by** an optimum overall performance score;
wherein the constructing (230) comprises:
- obtaining (231), from a repository, information characterizing respective data processing and inference blocks in terms of input and output data constraints and sets of rules for evaluating the performance of a respective data processing and interference block in terms of the obtained performance metrics by characterizing the respective identified data processing and inference blocks in terms of their respective input and output data constraints and the obtained performance metrics;
- identifying (232), based on the obtained information, data processing and inference blocks characterized with corresponding input and output data constraints;
- calculating (234), by means of fuzzy inference, one or more performance scores for the respective identified data processing and inference blocks by applying the sets of rules to the obtained metadata , the one or more performance scores thereby indicating the performance of the respective identified data processing and inference blocks in terms of the obtained metadata and performance metrics and its input and output data constraints.

2. The computer-implemented method according to claim 1, wherein the obtaining (210) metadata comprises obtaining one or more qualitative and/or quantitative metrics characterizing the data to be processed from a user.

3. The computer-implemented method according to claims 1 or 2, wherein the obtaining (210) metadata comprises obtaining data to be processed and deriving therefrom one or more qualitative and/or quantitative metadata characterizing the data to be processed.

4. The computer-implemented method according to claim 3, wherein the deriving comprises processing the received data by means of data analysers.

5. The computer-implemented method according to any one of the preceding claims, wherein the fuzzifying (220) comprises applying sets of membership functions to the respective metadata.

6. The computer-implemented method according to any one of the preceding claims, wherein the sets of rules for evaluating the performance of a respective data processing and interference block are derived based on its input and output constraints and the obtained performance metrics.

7. The computer-implemented method according to any one of the preceding claims, wherein the calculating (234) further comprises aggregating the derived respective performance scores of the identified data processing and inference blocks, and, combining the aggregated performance scores, thereby deriving an overall performance score for a respective candidate data processing and inference pipeline, wherein the combining comprises weighting the aggregated performance scores in accordance with weight factors associated with respective performance metrics.

8. The computer-implemented method according to any one of the preceding claims, wherein the constructing (230) is performed in an incremental manner.

9. The computer-implemented method according to any of the preceding claims, further comprising evaluating (250) the performance of the selected data processing and inference pipeline in terms of the obtained performance metrics and based on the data to be processed,
wherein the evaluating (250) comprising at least partly deploying the selected data processing and inference pipeline and determining an actual overall performance score for the at least partly deployed data processing and inference pipeline.

10. The computer-implemented method according to claim 9, wherein the evaluating (250) further comprises determining values of respective parameters associated with the respective data processing and inference blocks of the at least partly deployed pipeline.

11. A computer program product comprising computer-executable instructions for causing a computer to perform the method according to any one of the claims 1 to 10 when the program is run on the computer.

12. A computer readable storage medium comprising computer program product according to claim 11.

13. A data processing system programmed for carrying out the method according to any one of claims 1 to 10.
